# FASCICULE DE BREVET EUROPEEN

(11) **EP 2 416 975 B1**
(45) Date de publication et mention de la délivrance du brevet: **10.10.2018**
(21) Numéro de dépôt: 10723227.4
(22) Date de dépôt: 08.04.2010
(51) Int. Cl.: B60C 23/06, G01D 5/14, G01D 5/20, G01B 7/14, B60G 17/019, G01R 33/02, F16C 39/06

(54) **MESURE DU DEBATTEMENT D'UN ELEMENT EN ROTATION**
MESSUNG VON SCHWINGUNGEN IN EINEM ROTIERENDEN ELEMENT
MEASURING VIBRATION IN A ROTATING ELEMENT

(30) Priorité: 08.04.2009 FR 0952282
(43) Date de publication de la demande: 15.02.2012
(73) Titulaire: Commissariat à l'Énergie Atomique et aux Énergies Alternatives, 75015 Paris (FR)
(72) Inventeur: LE GOFF, Alexis, F-78000 Versailles (FR); BLANPAIN, Roland, F-38380 Entre-deux-Guiers (FR)
(74) Mandataire: Cabinet Beaumont
(86) Numéro de dépôt international: PCT/FR2010/050677
(87) Numéro de publication internationale: WO 2010/116094

(56) Documents cités:
- JP-A- 2003 285 728
- JP-A- 2003 344 205
- US-A1- 2001 008 083
- US-A1- 2003 010 107
- US-B1- 6 222 290
- US-B1- 6 249 067
- US-B1- 6 445 178

## Description

### Domaine de l'invention

La présente invention concerne de façon générale les systèmes de mesure et, plus particulièrement la mesure d'un déplacement d'un axe d'un élément en rotation, dans une direction perpendiculaire à cet axe.

La présente invention s'applique à titre d'exemple à l'évaluation d'un débattement vertical d'une roue de véhicule automobile.

### Exposé de l'art antérieur

L'évaluation du débattement vertical d'une roue de véhicule peut être utilisée pour évaluer l'usure d'une suspension. Selon un autre exemple, cette évaluation est utilisée à des fins d'asservissement de la rigidité des suspensions ou pour estimer les variations d'assiette du véhicule.

Une première technique connue pour évaluer le débattement vertical d'une roue par rapport au châssis d'un véhicule utilise un capteur à fil dont les extrémités respectives sont reliées à l'essieu de la roue et au châssis. Le capteur comporte une bobine centrale assurant la tension du fil. Le débattement vertical est obtenu par mesure de la position angulaire de cette bobine. Une telle technique est coûteuse et complexe à mettre à oeuvre. Elle est, en pratique, réservée à des tests lors de la fabrication ou de l'évaluation des véhicules.

Une autre technique connue utilise un rayon lumineux (typiquement un rayon laser) dont l'émetteur est porté par le châssis et qui se réfléchit sur la route. L'évaluation du trajet lumineux permet d'évaluer la hauteur du châssis, donc le débattement vertical des roues. Une telle technique reste complexe. De plus, les résultats dépendent de l'état de gonflage des pneumatiques.

Une autre technique connue est décrite dans le document EP-A-0 617 260. Cette technique intègre, dans l'articulation de la roue, un aimant et un capteur afin de mesurer l'inclinaison de la roue pour en déduire le débattement vertical. Cette technique requiert des modifications importantes de l'articulation de la roue.

Le document US-B-6 222 290 décrit un système d'entraînement électromagnétique dans lequel la position du centre d'un rotor est obtenue par mesure de champ électromagnétique. Au moins deux capteurs magnétiques sont utilisés pour évaluer la position du rotor à partir d'une détermination angulaire de la phase de rotation du rotor.

Il serait souhaitable de disposer d'un système d'évaluation du débattement vertical d'une roue de véhicule automobile qui soit de constitution simple. En particulier, il serait souhaitable de ne requérir aucune modification côté roue, ni aucune attache côté essieu.

Plus généralement, il serait souhaitable, de disposer d'un système d'évaluation d'un déplacement d'un objet dans une direction perpendiculaire à un axe de rotation de cet objet.

Le document US2003/0010107 décrit un procédé pour surveiller une condition de fonctionnement d'un pneu de véhicule.

Le document JP2003344205 décrit un procédé pour détecter un caractère anormal d'une pression interne d'un pneu.

Le document JP2003285728 décrit un procédé de mesure de force sur un pneu et un procédé de mesure d'un coefficient de frottement.

### Résumé

Un objet d'un mode de réalisation de la présente invention est de pallier tout ou partie des inconvénients des systèmes connus d'évaluation du débattement d'un élément en rotation.

Un objet d'un mode de réalisation de l'invention est de proposer un système ne nécessitant aucune intervention sur la roue ou sur l'essieu.

Plus généralement, un objet d'un mode de réalisation de l'invention est de proposer un système de mesure d'un déplacement d'un élément dans une direction perpendiculaire à son axe de rotation.

Pour atteindre tout ou partie de ces objets ainsi que d'autres, il est prévu un système de mesure d'une variation de distance d'un axe de rotation d'un objet par rapport à un point dans un plan perpendiculaire à cet axe, comportant :
au moins deux capteurs aptes à mesurer une information représentative d'une position angulaire dudit objet autour dudit axe, chaque capteur ayant une position fixe par rapport audit point, et comportant un magnétomètre propre à mesurer le champ magnétique émis par ledit objet qui présente une aimantation variable sur sa circonférence ; et
des moyens de détermination de ladite variation de distance à partir d'une variation de l'écart angulaire entre lesdits capteurs par rapport à l'axe, d'une révolution à une autre dudit objet, lesdits moyens exploitant un décalage temporel entre des extrema dans les réponses des deux capteurs.

Selon un mode de réalisation de la présente invention, lesdits moyens détectent, dans un signal de réponse desdits capteurs, au moins un extremum dans la signature magnétique à chaque révolution dudit objet.

Selon un mode de réalisation de la présente invention, les deux capteurs sont non alignés avec ledit point.

Selon un mode de réalisation de la présente invention, lesdits moyens évaluent l'écart temporel entre l'apparition dudit extremum dans les réponses respectives desdits capteurs, et en déduisent ladite variation d'écart angulaire.

Selon un mode de réalisation de la présente invention, le système est appliqué à une mesure de débattement vertical d'une roue de véhicule automobile.

Il est également prévu un procédé de mesure d'une variation de distance entre un axe de rotation d'un objet par rapport à un point dans un plan perpendiculaire à cet axe, comportant les étapes de :
mesurer une première information représentative d'une position angulaire dudit objet autour dudit axe au moyen d'un premier capteur, de position fixe par rapport audit point, et comportant un magnétomètre propre à mesurer le champ magnétique émis par ledit objet qui présente une aimantation variable sur sa circonférence ;
mesurer une deuxième information représentative d'une position angulaire dudit objet autour dudit axe au moyen d'un deuxième capteur, de position fixe par rapport audit point, et comportant un magnétomètre propre à mesurer le champ magnétique émis par ledit objet;
évaluer une variation de l'écart angulaire entre lesdits capteurs par rapport à l'axe, d'une révolution à une autre dudit objet en exploitant un décalage temporel entre des extrema dans les réponses des deux capteurs ; et
en déduire une variation de ladite distance.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une représentation schématique d'un véhicule automobile équipé d'un système selon un mode de réalisation de la présente invention ;
la figure 2 est une représentation schématique d'un détail du système au niveau d'une roue du véhicule ;
la figure 3 est un exemple d'allure du champ magnétique d'une roue de véhicule en fonction d'une position angulaire ;
la figure 4 est une représentation théorique du système de mesure ;
la figure 5 est un schéma bloc illustrant des étapes mises en oeuvre par un calculateur électronique d'un mode de réalisation d'un système d'évaluation du débattement vertical ;
les figures 6A et 6B sont des chronogrammes illustrant le fonctionnement d'une variante du mode de réalisation de la figure 5 ;
la figure 7 est un schéma bloc illustrant des étapes mises en oeuvre par un calculateur électronique d'un autre mode de réalisation d'un système d'évaluation du débattement vertical ;
les figures 8A, 8B, 8C, 8D, 8E et 8F sont des chronogrammes illustrant le fonctionnement du mode de réalisation de la figure 7 ;
la figure 9 est une vue latérale schématique d' une roue associée à un exemple non revendiqué d'un système d'évaluation du débattement vertical ; et
les figures 10A, 10B, et 10C sont des chronogrammes illustrant le fonctionnement du système de la figure 9.

De mêmes éléments ont été désignés par de mêmes références aux différentes figures.

### Description détaillée

Par souci de clarté, seuls les étapes et éléments utiles à la compréhension de l'invention ont été représentés aux figures et seront décrits. En particulier, les détails constitutifs d'un pneumatique à carcasse ou ceinture métallique auquel s'applique à titre d'exemple la présente invention n'ont pas été exposés, l'invention étant compatible avec tout pneumatique à carcasse et/ou ceinture métallique usuel. De plus, l'exploitation faite des mesures n'a pas non plus été détaillée, l'invention étant compatible avec toute application usuelle de telles mesures. Sauf précision contraire, les qualificatifs de direction (vertical, horizontal, etc.) et de position relative (dessous, dessus, etc.) sont arbitrairement exprimés dans l'orientation des figures.

Les modes de réalisation de la présente invention qui vont être décrits tirent profit de l'existence, dans un pneumatique de véhicule automobile, d'une ceinture métallique en un matériau ferromagnétique, le plus souvent en acier, présentant donc une aimantation rémanente liée aux champs magnétiques auxquels l'acier a été soumis. Cette ceinture métallique est intégrée dans la gomme de pneumatique au niveau de sa bande de roulement.

Plus généralement, ces modes de réalisation s'appliquent à des éléments en rotation susceptibles de présenter une aimantation irrégulière sur leur circonférence, de sorte qu'une position angulaire puisse être déterminée par une mesure de l'aimantation.

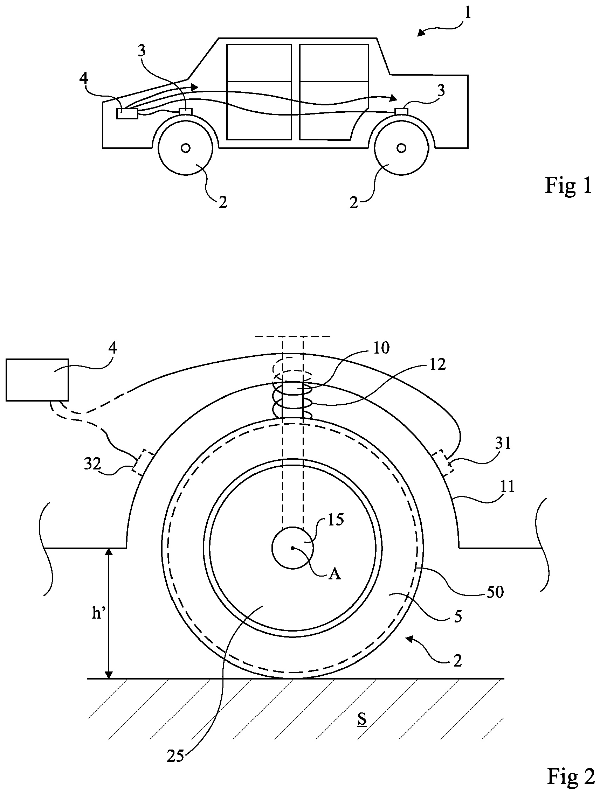

La figure 1 est une vue latérale très schématique d'un véhicule automobile 1 équipé d'un système d'évaluation du débattement vertical de ses roues. On suppose que chaque roue 2 du véhicule est équipée d'un dispositif 3 de mesure du débattement vertical et que les différentes mesures sont collectées par un dispositif centralisateur 4, par exemple l'ordinateur de bord du véhicule. La représentation de la figure 1 est schématique et seul deux dispositifs 3 y sont visibles.

La figure 2 représente un agrandissement au niveau d'une roue 2 du véhicule de la figure 1. Généralement, une jante 25 de la roue 2 est montée sur un moyeu 15 porté par un bras 10 relié au châssis 11 du véhicule par l'intermédiaire d'un mécanisme d'amortisseur et de ressort (symbolisé par un ressort 12). Lorsque le véhicule roule, la hauteur h' du châssis 11 par rapport au sol S varie en fonction de l'écrasement des suspensions et de l'écrasement du pneumatique. La variation autour d'une position de repos représente le débattement vertical de la roue en utilisation. De nombreux mécanismes amortisseurs (le cas échéant asservis) sont connus et les modes de réalisation décrits s'appliquent à n'importe quelle roue subissant un débattement vertical.

Dans l'exemple de la figure 2, la jante 25 porte un pneumatique 5 comportant une ceinture métallique 50. L'aimantation de la ceinture 50 dépend de l'histoire du pneumatique et des champs magnétiques subis par celui-ci, en particulier lors de sa fabrication. De plus, l'inventeur a constaté que cette aimantation est variable sur la circonférence du pneumatique.

Le dispositif 3 de la figure 2 comporte deux magnétomètres 31 et 32 portés par un élément fixe par rapport au châssis du véhicule, par exemple par le châssis lui-même ou par un élément de carrosserie (l'intérieur d'une aile au niveau du passage de roue). Comme l'aimantation du pneumatique n'est pas régulière, la valeur du champ magnétique mesurée par chaque magnétomètre varie lorsque la roue tourne. Ces variations, qui sont fonction de la position angulaire de la roue, définissent une signature magnétique périodique du pneumatique qui se répète d'un tour à l'autre.

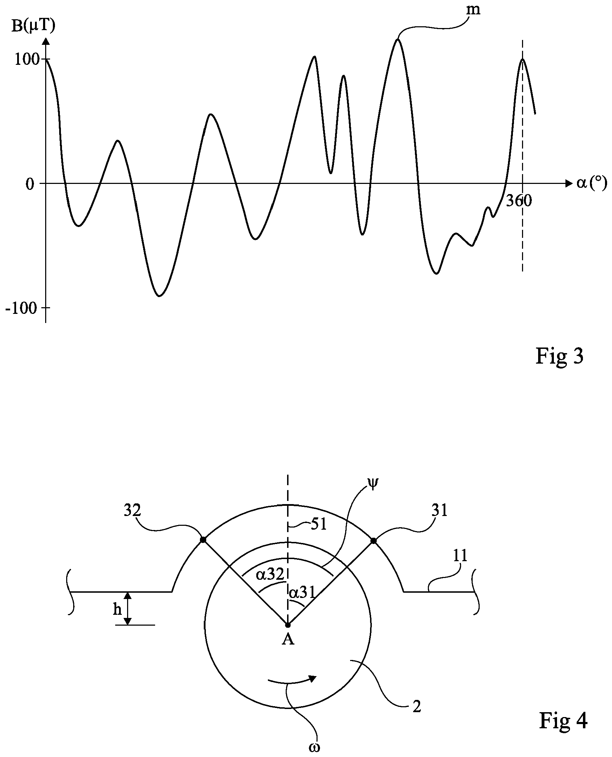

La figure 3 représente un exemple de variation de l'intensité du champ magnétique (en microtesla µT) mesurée à une distance fixe de l'axe de la roue en fonction d'une position angulaire α en degrés (°). La représentation de la figure 3 identifie de façon arbitraire des positions angulaires entre 0 et 360 degrés ainsi qu'un ordre de grandeur d'amplitude du champ magnétique. Cette amplitude dépend bien entendu de la distance du magnétomètre par rapport à la surface du pneumatique. De la même façon, le niveau de référence à 0 microtesla est arbitraire et dépend de l'étalonnage du magnétomètre.

Le champ magnétique mesuré par chaque magnétomètre est influencé par tous les éléments métalliques de la roue (en particulier la jante si celle-ci est en acier). Toutefois, même l'aimantation rémanente de la jante peut être variable, participant ainsi à la variation du champ magnétique mesurable sur la circonférence de la roue. Dans l'application aux véhicules automobiles, on peut considérer qu'en pratique si le magnétomètre est placé dans le prolongement d'un rayon de la roue à une distance de l'axe A représentant moins de 2 fois la valeur du rayon, il est capable de détecter une variation du champ en fonction de la position angulaire de la roue. Plus généralement, la règle de positionnement est que l'élément en rotation puisse être considéré, vu du magnétomètre, comme présentant une aimantation variable en fonction de sa position angulaire autour de son axe de rotation. Cette distance dépend bien entendu de la sensibilité du magnétomètre.

Lorsque la roue tourne, chaque capteur mesure donc la signature de la roue mais avec un décalage temporel.

La figure 4 est une représentation schématique illustrant le fonctionnement du système de mesure de la figure 2. Les deux magnétomètres sont symbolisés par des points identifiés par les références 31 et 32. En supposant un sens de rotation anti-horaire de la roue 2, un point caractéristique de la signature magnétique est détecté par le capteur 31 puis, avec un retard τ par le capteur 32. Par point caractéristique, on entend un point de la signature que l'on peut détecter dans la réponse des capteurs à chaque tour de roue. De préférence, ce point sera le maximum (m, figure 3) ou le minimum d'amplitude. Le retard τ entre l'apparition du maximum m sur le magnétomètre 32 par rapport à son apparition sur le magnétomètre 31 dépend de la vitesse ω de rotation de la roue et de l'angle ψ entre les vecteurs reliant le centre A de la roue aux points 31 et 32, respectivement. Or, cet angle ψ dépend de la hauteur h entre l'axe A et le châssis 11 (ou entre cet axe A et n'importe quel point fixe par rapport aux capteurs 31 et 32). Dans l'exemple de la figure 4 où l'axe A est supposé sous la droite reliant les points 31 et 32, plus la hauteur h est faible, plus l'angle ψ est ouvert et plus le retard τ est important. Si l'axe A passe de l'autre côté de la droite reliant les points 31, 32, l'amplitude de l'écart entre l'axe A et l'intersection de cette droite avec la verticale 51 à l'axe augmente avec une fermeture de l'angle ψ, donc avec une diminution du retard. La référence temporelle requise pour évaluer le retard, donc la variation angulaire, peut être obtenue de différentes façons (mesure de la vitesse de rotation de la roue, obtention directe des positions angulaires en fonction du temps, etc.) dont des exemples seront décrits par la suite.

Pour simplifier, on suppose que les capteurs 31 et 32 sont dans un plan perpendiculaire à l'axe A. Toutefois, ce qui va être décrit se transpose au cas où les capteurs sont décalés dans le plan perpendiculaire à l'axe. Une correction d'amplitude sera alors nécessaire pour une mise à l'échelle des différents signaux.

La position des magnétomètres 31 et 32, plus particulièrement leur écartement de la verticale 51 à l'axe A, conditionne la précision des mesures. Plus les capteurs sont écartés, meilleur est la définition pour une résolution donnée. De préférence, les deux magnétomètres ont des positions symétriques par rapport à la verticale 51 à l'axe A de la roue. Idéalement, les magnétomètres 31 et 32 sont positionnés pour que la position de repos (débattement nul) corresponde à un angle de 180° (magnétomètre alignés à l'horizontale avec l'axe A). Pour simplifier l'exposé, on suppose que les angles α1 et α2, entre les rayons sur lesquels sont placés les magnétomètres respectifs 31 et 32, et la direction dans laquelle le débattement est mesuré (dans l'exemple, la verticale) sont égaux. En pratique, ces angles pourront être différents, à condition d'adapter les traitements effectués sur les signaux électriques fournis par les capteurs pour mettre à l'échelle les variations angulaires mesurées et compenser ainsi la différence angulaire. On veillera cependant à ce que les capteurs 31 et 32 ne soient pas tous les deux alignés sur la direction du débattement à mesurer car il n'y aurait alors pas de retard dans l'apparition d'un même point de la signature magnétique sur la réponse des deux capteurs.

Les magnétomètres 31 et 32 sont de préférence à équidistance de la périphérie du pneumatique. Dans le cas contraire, on adaptera les traitements effectués sur les signaux électriques fournis par les capteurs pour mettre à même échelle les amplitudes des champs magnétiques mesurés et compenser ainsi la différence de distance.

En pratique, le choix des positions des capteurs sur le châssis du véhicule dépend du type de véhicule et des emplacements disponibles.

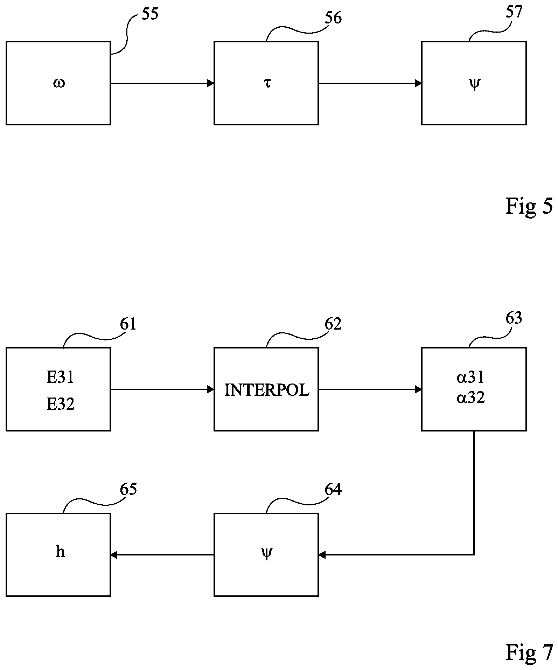

La figure 5 représente sous forme de blocs, un mode de mise en oeuvre du procédé de mesure du débattement vertical dans le système des figures 2 et 4.

Dans cet exemple, la référence temporelle permettant d'évaluer le retard entre l'apparition d'un point caractéristique de la signature magnétique (par exemple le maximum ou le minimum) est la vitesse de rotation de la roue. La vitesse de rotation ω peut être obtenue (bloc 55) de différentes façons. Par exemple, cette vitesse est déduite par l'ordinateur de bord de la vitesse du véhicule. Selon un autre exemple, la vitesse est fournie par un capteur de vitesse intégré dans la roue et exploitée par ailleurs par l'ordinateur de bord (typiquement, pour le programme de stabilité électronique ou ESP "Electronic Stability Programm", qui équipe de plus en plus les véhicules).

Le retard τ entre l'apparition du même point (dans l'exemple, le maximum) sur la signature mesurée par les deux capteurs est déterminé (bloc 56) par une détection du maximum dans les réponses respectives des capteurs 31 et 32.

Enfin (bloc 57), l'angle ψ est déduit en faisant le rapport entre le retard τ et la vitesse ω. L'unité d'obtention de l'angle dépend de l'unité de la vitesse angulaire.

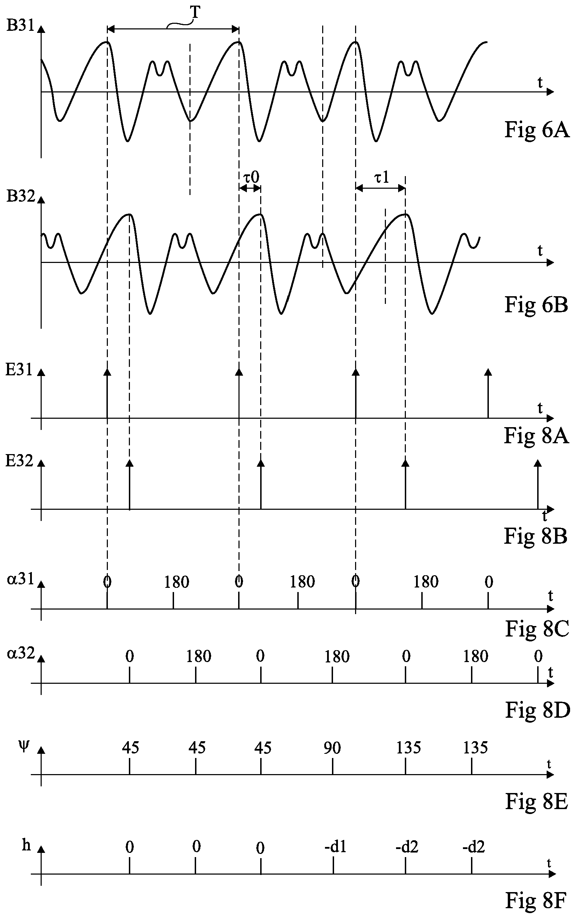

Les figures 6A et 6B sont des chronogrammes d'exemples de réponses électriques B31 et B32 des magnétomètres 31 et 32 illustrant une variante du mode de mise en oeuvre de la figure 5, fournissant une référence temporelle locale au niveau de la roue tout en rendant le système indépendant d'autres capteurs. La période T (figure 6A) de la signature magnétique est extraite de la réponse (par exemple, B31) d'un des magnétomètres en déterminant l'intervalle de temps entre deux apparitions successives d'un point caractéristique. Cet intervalle de temps est déterminé par le calcul à partir des signaux reçus. Le calculateur détermine alors la vitesse angulaire (ω=360/T ou 2π/T). Les étapes 56 et 57 ne sont pas modifiées.

La mesure peut être rendue plus fiable en tenant compte de plusieurs points caractéristiques pour s'affranchir d'éventuelles perturbations magnétiques susceptibles de masquer une occurrence d'un maximum ou minimum.

Dans l'exemple des figures 6A et 6B, on suppose qu'un retard τ₀ correspond à la position de repos (débattement nul) illustré par la première période des réponses B31 et B32. On suppose que la roue tourne à vitesse constante et remonte dans le deuxième tour de roue. Le maximum m est donc détecté plus tôt par le capteur 31 et plus tard par le capteur 32 par rapport à la période précédente. Le retard entre l'apparition du maximum dans les deux réponses prend alors une valeur τ1 (supérieure au retard τ₀).

Bien que les exemples ci-dessus aient, pour simplifier, été exposés avec une terminologie correspondant plus à une technologie analogique, les différentes étapes seront en pratique préférentiellement effectuées après échantillonnage des signaux dans une technologie numérique.

La figure 7 est un schéma bloc illustrant des étapes mises en oeuvre par un calculateur électronique d'un autre mode de réalisation d'un système d'évaluation du débattement vertical.

Les figures 8A, 8B, 8C, 8D, 8E et 8F sont des chronogrammes illustrant le fonctionnement du mode de réalisation de la figure 7. On suppose des réponses électriques B31 et B32 identiques à celles des figures 6A et 6B.

Les réponses B31 et B32 des capteurs sont échantillonnées et on détecte (bloc 61, figure 7) les instants d'apparitions successifs d'un même point caractéristique (par exemple, le maximum m) dans les réponses échantillonnées des deux capteurs, comme l'illustrent les allures E31 (figure 8A) et E32 (figure 8B).

Puis (bloc 62, INTERPOL), on effectue une interpolation linéaire pour obtenir (bloc 63), pour chaque capteur, la position angulaire α31 (figure 8C) et α32 (figure 8D) en fonction du temps. L'origine (angle 0) est arbitrairement prise aux instants d'apparition des maximums. Aux figures 8C et 8D ont été illustrés les angles intermédiaires de 180°.

On effectue alors (bloc 64), la différence entre les angles α31 et α32 pour obtenir l'angle ψ (figure 8E). Dans l'exemple, on suppose que le système détermine l'angle deux fois par période de rotation de la roue (aux positions angulaires 0 et 180° du capteur 32. L'angle prend par exemple successivement, en degrés, les valeurs 45, 45, 45, 90, 135, 135, etc.

Enfin (bloc 65, figure 7), le débattement vertical h (figure 8F) est déduit de l'angle ψ. L'exemple des figures 8A à 8F reprenant les allures des figures 6A et 6B, le débattement h est nul pour les trois premiers échantillons exploités, puis présente une première valeur -d₁ (on considère arbitrairement une valeur négative quand la roue remonte par rapport à sa position de référence), puis une valeur -d₂.

Par rapport à l'exemple décrit en relation avec la figure 5, les figures 8A à 8D font ressortir que la résolution du système dépend du nombre d'échantillons de mesure pris en compte (le débattement intermédiaire -d₁ lors de la remontée de la roue est détectée par la position intermédiaire à 180°).

La fréquence d'échantillonnage des réponses B31 et B32 des capteurs est choisie en fonction de la vitesse maximale attendue de rotation de la roue pour qu'un nombre suffisant d'échantillons permettent d'isoler au moins un point caractéristique par tour, de façon à obtenir au moins une évaluation du débattement par tour de roue.

Pour l'application aux véhicules automobiles, la fréquence de résonance d'une suspension est de l'ordre du Hz. La prise en compte d'une évaluation par tour donne déjà un résultat satisfaisant dès que le véhicule roule à plus d'environ 15 km/h. En pratique, on préfèrera prendre au moins cent échantillons par seconde pour rendre plus fiable la détection des points caractéristiques.

Bien que l'on ait considéré dans les chronogrammes ci-dessus une vitesse de rotation constante de la roue, la technique décrite fournit le débattement quelle que soit la vitesse de rotation, la mesure du débattement étant obtenue en tenant compte de cette vitesse.

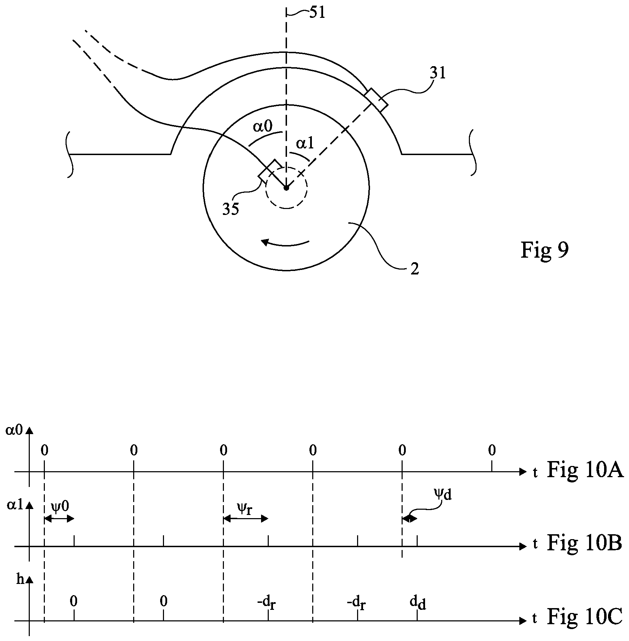

La figure 9 est une vue latérale schématique d'une roue associée à encore un exemple non revendiqué d'un système d'évaluation du débattement vertical.

Les figures 10A, 10B, et 10C sont des chronogrammes illustrant le fonctionnement du système de la figure 9.

Dans cet exemple, un seul magnétomètre 31 est utilisé pour mesurer la signature magnétique. Une position angulaire de référence est fournie par un capteur non magnétique 35 porté par la roue et capable de fournir, en fonction du temps, une référence angulaire α₀ par rapport à la verticale. Comme l'illustre la figure 10A, la période d'apparition de la référence (arbitrairement notée 0°) est indépendante du débattement vertical de la roue. Bien entendu, elle dépend de la vitesse de rotation de la roue que l'on a considérée stable pour simplifier. Le capteur 31 fournit une réponse angulaire al (figure 10B) représentative des occurrences d'un point caractéristique de la signature. Le débattement h (figure 10C) est déduit de la variation de l'angle ψ (α₀ + α₁). Par rapport aux modes de réalisation précédents, l'angle ψ pris en compte pour évaluer le débattement ne s'ouvre ou se ferme que d'un côté par rapport à la verticale 51 à l'axe de la roue.

Aux figures 10B et 10C, on suppose une remontée de la roue dans les troisième et quatrième tours (angle ψᵣ, distance -dᵣ) et une descente dans le cinquième tour (angle ψ_{d}, distance +d_{d}), par rapport à une position de repos (angle ψ₀, distance 0) dans les première et deuxième tours.

Comme dans le mode de réalisation à deux capteurs magnétiques, on exploite un décalage temporel entre les réponses des deux capteurs, la réponse du capteur 35 fournissant ici une référence.

Quel que soit le mode de réalisation, l'obtention du débattement h à partir de la variation de l'écart angulaire ψ ou α1 requiert soit un étalonnage (par exemple, par une procédure d'apprentissage), soit un calcul géométrique prenant en compte les positions des capteurs et la position angulaire de l'axe (de la roue) au repos.

Il faut cependant que la roue tourne pour que la mesure puisse être effectuée.

Même si les points caractéristiques utilisés sur les signatures sont différents entre les capteurs 31 et 32 (par exemple le minimum pour le capteur 31 et le maximum pour le capteur 32, il suffit de déterminer l'écart entre ces points caractéristiques sur la signature pour être en mesure d'effectuer le calcul.

Selon une variante de réalisation, un troisième capteur (magnétomètre) est utilisé pour mesurer une autre position angulaire. On gagne ainsi en précision grâce à la redondance obtenue dans les mesures.

Un avantage des modes de réalisation décrits est qu'ils ne nécessitent aucune modification des pneumatiques existants. De plus, les modes de réalisation décrits ne requièrent aucune modification des jantes et moyeux existants, à condition d'utiliser un capteur angulaire déjà présent sur la roue dans les modes de réalisation utilisant un capteur non magnétique.

Par ailleurs, la mesure est indépendante de la pression de gonflage des pneumatiques car on évalue la position de l'axe par rapport au châssis. Si le pneumatique est dégonflé, l'amplitude des signaux mesurés diminue car la distance entre le pneumatique et le capteur augmente, mais la signature magnétique demeure avec un maximum et un minimum.

L'aimantation rémanente de la ceinture métallique du pneumatique (et plus généralement de la roue) risque de subir des modifications pendant la vie du pneumatique. Cela est sans incidence sur le fonctionnement de l'invention car le champ magnétique mesurable en périphérie de la roue présentera toujours des points caractéristiques (maximum et minimum). Dans les modes de réalisation utilisant au moins deux magnétomètres, l'adaptation du système est de plus automatique. Dans les exemples non revendiqués n'utilisant qu'un capteur magnétique, cela requiert un étalonnage périodique du système pour corriger si besoin l'écart entre la position de référence et le point caractéristique.

En variante, le pneu est lors de sa fabrication soumis à un champ magnétique contrôlé lui conférant une aimantation irrégulière. Cela permet d'accroître l'aimantation, donc l'intensité du signal capté par les magnétomètres. De plus, on peut le cas échéant faire en sorte que l'aimantation génère une signature en forme de sinusoïde. Il devient alors plus simple de mesurer le débattement à partir d'une mesure du déphasage entre les signaux captés.

On notera que le champ magnétique terrestre est perçu par les magnétomètres. Cela est sans incidence sur l'évaluation car il est possible de supprimer la composante continue de la signature en centrant le signal à chaque tour de roue.

Bien que l'invention ait été plus particulièrement décrite en relation avec une application à une roue de véhicule automobile, elle s'applique plus généralement dès qu'un élément en rotation présente une signature magnétique variable en fonction de sa position angulaire avec une amplitude suffisante pour être détectée par un magnétomètre fixe dans un plan perpendiculaire à l'axe dans lequel on souhaite mesurer le débattement. En particulier, ce débattement n'est pas forcément vertical, pourvu d'être dans une direction donnée. De plus, le caractère variable de l'aimantation peut venir d'une inhomogénéité de l'aimantation dans un cylindre plein. Une telle inhomogénéité peut provenir de l'intérieur d'un cylindre de révolution circulaire ou d'irrégularités dans la surface du cylindre.

Par exemple, une telle détermination peut être effectuée sur un rouleau métallique plein, pourvu que la signature magnétique de celui-ci varie sur sa circonférence. Ainsi, l'invention peut être utilisée pour mesurer une variation de distance de l'axe de rotation d'un rouleau d'une machine d'une installation industrielle dans le plan perpendiculaire à cet axe.

Divers modes de réalisation avec diverses variantes ont été décrits ci-dessus. On notera que l'homme de l'art pourra combiner divers éléments de ces divers modes de réalisation et variantes sans faire preuve d'activité inventive, sans sortir du cadre de la présente invention tel que revendiqué dans les revendications 1 à 6. Par ailleurs, la mise en oeuvre pratique de l'invention et les calculs à effectuer par des moyens informatiques ou calculateurs électroniques, convenablement programmés ou configurés pour organiser la commande des capteurs et la mémorisation et le traitement des mesures par des moyens adaptés, est à la portée de l'homme du métier à partir des indications fonctionnelles données ci-dessus.

## Revendications

1. Système de mesure d'une variation de distance (h) d'un axe (A) de rotation d'un objet (2) par rapport à un point dans un plan perpendiculaire à cet axe, comportant :
au moins deux capteurs (31, 32 ; 31, 35) aptes à mesurer une information représentative d'une position angulaire dudit objet autour dudit axe, chaque capteur ayant une position fixe par rapport audit point et comportant un magnétomètre propre à mesurer le champ magnétique émis par ledit objet qui présente une aimantation variable sur sa circonférence,
des moyens (4) de détermination de ladite variation de distance (h) à partir d'une variation de l'écart angulaire (ψ) entre lesdits capteurs par rapport à l'axe (A), d'une révolution à une autre dudit objet, lesdits moyens exploitant un décalage temporel entre des extrema dans les réponses des deux capteurs.

2. Système selon la revendication 1, dans lequel lesdits moyens (4) détectent, dans un signal de réponse desdits capteurs (31), au moins un extremum (m) dans la signature magnétique à chaque révolution dudit objet (2).

3. Système selon la revendication 1 ou 2, dans lequel les deux capteurs sont non alignés avec ledit point.

4. Système selon la revendication 2, dans lequel lesdits moyens (4) évaluent l'écart temporel entre l'apparition dudit extremum (m) dans les réponses respectives desdits capteurs, et en déduisent ladite variation d'écart angulaire (ψ).

5. Système selon l'une quelconque des revendications 1 à 4, appliqué à une mesure de débattement vertical (h) d'une roue (2) de véhicule automobile.

6. Procédé de mesure d'une variation de distance (h) entre un axe (A) de rotation d'un objet (2) par rapport à un point dans un plan perpendiculaire à cet axe, comportant les étapes de :
mesurer une première information représentative d'une position angulaire dudit objet autour dudit axe au moyen d'un premier capteur (31), de position fixe par rapport audit point, et comportant un magnétomètre propre à mesurer le champ magnétique émis par ledit objet qui présente une aimantation variable sur sa circonférence ;
mesurer une deuxième information représentative d'une position angulaire dudit objet autour dudit axe au moyen d'un deuxième capteur (32, 35), de position fixe par rapport audit point, et comportant un magnétomètre propre à mesurer le champ magnétique émis par ledit objet ;
évaluer une variation de l'écart angulaire (ψ) entre lesdits capteurs par rapport à l'axe (A), d'une révolution à une autre dudit objet en exploitant un décalage temporel entre des extrema dans les réponses des deux capteurs ; et
en déduire une variation de ladite distance (h).

## Patentansprüche

1. Ein System zum Messen einer Variation des Abstandes (h) einer Rotationsachse (A) eines Objekts (2) bezüglich eines Punktes in einer Ebene senkrecht zu dieser Achse, das Folgendes aufweist:
wenigstens zwei Sensoren (31, 32; 31, 35), die geeignet sind zum Messen von Information, die eine Winkelposition des Objekts um die Achse darstellt, wobei jeder Sensor eine feste Position bezüglich des Punktes besitzt und ein Magnetometer aufweist, der geeignet ist zum Messen des Magnetfeldes, das durch das Objekt, welches eine variable Magnetisierung um seinen Umfang besitzt, emittiert wird,
Mittel (4) zum Bestimmen der Variation des Abstandes (h) basierend auf einer Variation des Winkelabstandes (ψ) zwischen den Sensoren bezüglich der Achse (A) von einer Umdrehung des Objekts zur nächsten, wobei die Mittel eine Zeitverschiebung zwischen Extrema in den Reaktionen der zwei Sensoren ausnutzen.

2. System nach Anspruch 1, wobei die Mittel (4) in einem Reaktionssignal der Sensoren (31) wenigstens ein Extremum (m) in der magnetischen Signatur jeder Umdrehung des Objekts (2) detektieren.

3. System nach Anspruch 1 oder 2, wobei die zwei Sensoren nicht mit dem Punkt ausgerichtet sind.

4. System nach Anspruch 2, wobei die Mittel (4) das Zeitintervall zwischen dem Auftreten des Extremums (m) in den jeweiligen Reaktionen der Sensoren schätzen und die Winkelabstandsvariation (ψ) davon ableiten.

5. System nach einem der Ansprüche 1 bis 4, angewendet für eine Messung des vertikalen Hubs (h) eines Motorfahrzeugrades (2).

6. Verfahren zum Messen einer Variation des Abstandes (h) zwischen einer Rotationsachse (A) eines Objekts (2) bezüglich eines Punktes in einer Ebene senkrecht zu dieser Achse, das die folgenden Schritte aufweist:
Messen erster Information, die eine Winkelposition des Objekts um die Achse darstellt mittels eines ersten Sensors (31) an einer festen Position bezüglich des Punktes, der ein Magnetometer aufweist, das geeignet ist zum Messen des Magnetfeldes, das durch das Objekt, welches eine variable Magnetisierung um seinen Umfang besitzt, emittiert wird;
Messen zweiter Information, die eine Winkelposition des Objekts um die Achse darstellt mittels eines zweiten Sensors (32, 35) mit einer festen Position bezüglich des Punktes, und der ein Magnetometer aufweist, das geeignet ist zum Messen des Magnetfeldes, das durch das Objekt, emittiert wird;
Schätzen einer Variation des Winkelabstandes (ψ) zwischen den Sensoren bezüglich der Achse (A) von einer Umdrehung des Objekts zur nächsten durch Ausnutzung einer Zeitverschiebung zwischen Extrema in den Reaktionen der zwei Sensoren; und
Ableiten einer Variation des Abstandes (h) davon.

## Claims

1. A system for measuring a variation of the distance (h) of a rotation axis (A) of an object (2) with respect to a point in a plane perpendicular to this axis, comprising:
at least two sensors (31, 32; 31, 35) capable of measuring information representative of an angular position of said object around said axis, each sensor having a fixed position with respect to said point and comprising a magnetometer capable of measuring the magnetic field emitted by said object which has a variable magnetization over its circumference,
means (4) for determining said variation of the distance (h) based on a variation of the angular distance (ψ) between said sensors with respect to the axis (A), from one revolution to another of said object, said means exploiting a time shift between extrema in the responses of the two sensors.

2. The system of claim 1, wherein said means (4) detect, in a response signal of said sensors (31), at least one extremum (m) in the magnetic signature for each revolution of said object (2).

3. The system of claim 1 or 2, wherein the two sensors are not aligned with said point.

4. The system of claim 2, wherein said means (4) estimate the time interval between the occurrence of said extremum (m) in the respective responses of said sensors, and deduce said angular distance variation (ψ) therefrom.

5. The system of any of claims 1 to 4, applied to a measurement of the vertical lift (h) of a motor vehicle wheel (2) .

6. A method for measuring a variation of the distance (h) between a rotation axis (A) of an object (2) with respect to a point in a plane perpendicular to this axis, comprising the steps of:
measuring first information representative of an angular position of said object around said axis by means of a first sensor (31), of fixed position with respect to said point, comprising a magnetometer capable of measuring the magnetic field emitted by said object which has a variable magnetization over its circumference;
measuring second information representative of an angular position of said object around said axis by means of a second sensor (32, 35) having a fixed position with respect to said point and comprising a magnetometer capable of measuring the magnetic field emitted by said object;
estimating a variation of the angular distance (ψ) between said sensors with respect to the axis (A), from one revolution to another of said object by exploiting a time shift between extrema in the responses of the two sensors; and
deducing therefrom a variation of said distance (h).
